Europäisches Patentamt

**European Patent Office**

**Office européen des brevets**

(11) Publication number: **0 178 093**
A1

# EUROPEAN PATENT APPLICATION

(21) Application number: 85306814.6

(22) Date of filing: 25.09.85

(51) Int. Cl.⁴: **B 29 C 33/52**

(30) Priority: 28.09.84 GB 8424545

(43) Date of publication of application: 16.04.86
Bulletin 86/16

(84) Designated Contracting States: **AT BE CH DE FR IT LI LU NL SE**

(71) Applicant: FRY'S METALS LIMITED, Tandem Works Merton Abbey, London SW19 2PD (GB)

(72) Inventor: Pascoe, Graham, 75 Lower Road, Fetcham Leatherhead Surrey (GB)
Inventor: Todd, Frank, 68 Avon Street, Motherwell Scotland (GB)
Inventor: Kidd, Thomas Forbes, Bank View, Main Street, Longforgan Dundee Scotland (GB)

(74) Representative: Leistikow, Frederick Walter Rudolph et al, BREWER & SON 5-9 Quality Court Chancery Lane, London WC2A 1HT (GB)

(54) An improved metal core for use in plastics moulding.

(57) A casting 10 of readily fusible metal to be used as a melt-out core for a moulding of plastics material contains a removable insert 11 for example of steel.

An improved metal core for use in
plastics moulding.


It is known to mould articles of plastics
material around a melt-out core of readily fusible metal,
which is subsequently removed from the moulded article
by melting.  This procedure is especially useful in the
manufacture of components for the automobile industry mode
of plastics material.  The fusible metal used is an alloy
having a solidus temperature in the range of 35 to
300°C

A major factor in selecting the alloy to be used
for the core is the thermal and pressure regime
encountered during the plastics moulding operation.
This moulding operation can be pressure injection
moulding of thermoplastics, pressure injection moulding
or thermosetting plastics or compression moulding.

Each of these processes imposes pressure upon the
core material during the moulding cycle, as well as
a temperature that is determined by the type of plastics
material  used.

It is desirable that the metal core should have
the lowest possible melting temperature so that subsequent removal by melting can be carried out quickly
and efficiently.  Accordingly it is the practice to
use metals whose solidus temperature is up to 100°C
above the plastics injection temperature.  At these
temperatures a significant proportion of the mechanical
properties of the alloy is lost.  Under the pressures
encountered in, and necessary for the plastics injection
sequence, distortion, twisting and movement can occur
which deleteriously affect the position of the cavity
produced by the core within the plastics component.

As has been mentioned before, removal of the metal core is achieved by melting, the melting operation typically being carried out using an oil as a heat transfer fluid. To facilitate melt-out it is advantageous to provide a maximum surface area for heat transfer and to minimise the total mass of metal to be melted.

The invention provides such a melt-out core, which has been cast around at least one removable insert, for example of steel. The core may be transferred after casting with the insert or inserts in place to a plastics moulding machine. Alternatively, the insert or inserts may be removed after casting of the core and the resulting shell of readily fusible metal fitted over correspondingly shaped location pins, or a single such pin, in the moulding machine. Such pins serve to locate the core with respect to the die cavity and to provide internal mechanical strength to the core material to resist distortion and movement under the pressures and temperatures experienced during moulding.

Upon completion of the plastics moulding sequence, the inserts or location pins are withdrawn. At the subsequent core melt-out stage the resulting cavities in the core provide an increased surface area for heat transfer to take place, thus facilitating and speeding the melt-out operation, as well as affording the aforementioned benefit of reducing the mass of the core, thus providing additional benefits in terms of metal handling, power consumption in metal melting and lowering the amount of metal in the circuit.

The inserts or pins may be parallel or tapered; they may be of circular, oval or other cross-section; they need not be of consistent dimensions along their length; they may be solid or hollow; and they may have a complex shape to provide specific strengths or cooling rates.

-3-

An embodiment of melt-out core according to the invention is illustrated in the accompanying diagrammatic drawing.

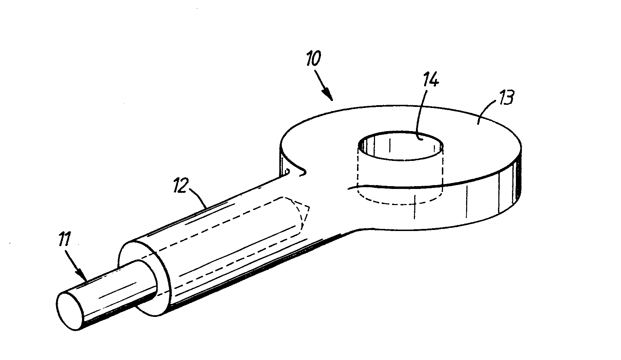

A melt-out core 10, made of an alloy of 56% tin, 3% antimony, the rest lead in proportions by weight, and intended for an automobile water pump moulded from plastics material is shown in the drawing. It contains an insert 11 of steel having a diameter of 1 cm. The external diameter of the portion 12 of the core which accommodates the insert is 2½ cm. The total length of the core is 15 cm and the diameter of the portion 13 is 7.5 cm. The portion 12 has a through-going hole 14.

CLAIMS :

1.   A melt-out core (10) of readily fusible metal, for use in plastics moulding, which has been cast around a removable insert (11).

2.   A core according to claim 1, wherein the insert is made of steel.

1/1

0178093

European Patent
Office

**EUROPEAN SEARCH REPORT**

Application number

EP 85 30 6814

| DOCUMENTS CONSIDERED TO BE RELEVANT | | | Page 2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | FR-A-1 582 262 (WAVIN) <br> * Page 2, lines 27-29; abstract; figures * <br><br> --- | 1 | |
| A | FR-A-2 477 462 (OZEN) <br> * Claims; figures 4,5 * <br><br> ----- | 1 | |
| | | | **TECHNICAL FIELDS SEARCHED (Int. Cl.4)** |

The present search report has been drawn up for all claims

| Place of search | Date of completion of the search | Examiner |
|---|---|---|
| THE HAGUE | 19-12-1985 | LABEEUW R.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

PO Form 1503 03.82

0178093

European Patent Office

**EUROPEAN SEARCH REPORT**

Application number

EP 85 30 6814

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | FR-A-1 366 921 (A. GILLE) * Whole document in particular page 2, left-hand column, lines 43-50, right-hand column, lines 20-22 * | 1,2 | B 29 C 33/52 |
| X | US-A-2 203 421 (E.P. STEVENSON) * Whole document in particular column 2, line 30 * | 1,2 | |
| X | GB-A- 828 685 (E.K. COLE) * Whole document * | 1 | |
| X | FR-A-1 047 468 (Y.-V. DESMARCHELIER) * Page 2, left-hand column, last paragraph; abstract; figure * | 1 | |
| X | GB-A-1 250 476 (F.H. BOURNER) * Claims; figures * | 1 | TECHNICAL FIELDS SEARCHED (Int. Cl.4) B 29 C |
| X | FR-A-1 162 096 (S. PRIOR) * Page 1, right-hand column, line 16; abstract; figures * | 1,2 | |
| X | FR-A- 965 300 (RHODIACETA) * Page 2, lines 25-29; abstract; figures 3,4 * | 1 | |
| | --- -/- | | |

The present search report has been drawn up for all claims

| Place of search | Date of completion of the search | Examiner |
|---|---|---|
| THE HAGUE | 19-12-1985 | LABEEUW R.C.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82